(19) Europäisches Patentamt / European Patent Office / Office européen des brevets

(11) **EP 3 503 377 B1**

(12) **EUROPEAN PATENT SPECIFICATION**

(45) Date of publication and mention
of the grant of the patent:
**16.09.2020 Bulletin 2020/38**

(21) Application number: **18213328.0**

(22) Date of filing: **18.12.2018**

(51) Int Cl.:
***H02P 29/60*** *(2016.01)*

(54) **OVERHEATING DETECTION DEVICE**

ÜBERHITZUNGSDETEKTIONSVORRICHTUNG

DISPOSITIF DE DÉTECTION DE SURCHAUFFE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2017 JP 2017244226**

(43) Date of publication of application:
**26.06.2019 Bulletin 2019/26**

(73) Proprietor: **AISIN SEIKI KABUSHIKI KAISHA
Kariya-shi,
Aichi-ken 448-8650 (JP)**

(72) Inventor: **TSUJI, Takeru
KARIYA-SHI, AICHI-KEN, 448-8650 (JP)**

(74) Representative: **Cabinet Beau de Loménie
158, rue de l'Université
75340 Paris Cedex 07 (FR)**

(56) References cited:
JP-A- 2017 028 805    JP-B2- 5 674 524
US-A1- 2017 001 661    US-A1- 2017 264 233

**Description**

TECHNICAL FIELD

An embodiment of this disclosure relates to an overheating detection device.

BACKGROUND DISCUSSION

In the related art, an electric power steering device is used in a vehicle such as an automobile so that a motor supports a steering wheel operation by a person. In this motor, a rotor rotates as a result of electrification of a coil provided in a stator. Once the motor electrifies the coil, the coil generates heat and the heat is stored in the motor. Accordingly, overheating limiting control for lowering the temperature of the motor before the motor is overheated is required.

As this overheating limiting control, the temperature of the motor is prevented from exceeding the heat resistance temperature of the weakest part that is most heat-susceptible in the motor such that the weakest part is not affected by the heat storage. Specifically, in a case where the temperature of the coil is equal to or higher than the heat resistance temperature of the weakest part, the temperature of the coil is lowered by, for example, the coil electrification being stopped or the amount of the coil electrification being limited as the control for preventing the temperature of the weakest part from exceeding the heat resistance temperature. In some alternative cases, this control is replaced with urging message notification with respect to a vehicle driver for vehicle speed reduction or stopping of excessive steering wheel turning so that the coil electrification amount is limited.

JP 2010-148322 is an example of the related art.

US 2017/264233 discloses a temperature monitoring device, a temperature monitoring method, and an information processing program and recording medium.

US 2017/001661 discloses a rotating electric machine control device.

When the temperature of the coil reaches the heat resistance temperature of the weakest part, the temperature of the weakest part does not necessarily rise to the heat resistance temperature, and motor overheating limiting control is performed in a stage where the weakest part is yet to be affected.

SUMMARY

The present invention is defined by the claim 1. Further advantages are defined by the dependent claims.

An overheating detection device according to an aspect of this disclosure includes a temperature acquisition unit acquiring a temperature of a coil provided in a stator of a motor having a rotor and the stator and a temperature of a most temperature-susceptible weakest part in the motor or a part in a vicinity of the weakest part, a thermal equilibrium temperature estimation unit estimating a temperature at which the coil and the weakest part or the part in the vicinity of the weakest part are in thermal equilibrium based on the temperature of the coil and the temperature of the weakest part or the part in the vicinity of the weakest part acquired by the temperature acquisition unit, and a control portion performing first predetermined control in a case where the thermal equilibrium temperature estimated by the thermal equilibrium temperature estimation unit is equal to or higher than a predetermined first threshold value. With this configuration, it is unnecessary to stop electrifying the coil or limit the amount of electrification of the coil at a point in time when the temperature of the coil becomes equal to or higher than the heat resistance temperature of the weakest part or the part in the vicinity of the weakest part, and thus the merchantability of the motor can be improved.

In the overheating detection device according to the aspect of this disclosure, the control portion may perform control for limiting torque of the motor as the first predetermined control. With this configuration, the torque of the motor can be automatically limited in a case where the thermal equilibrium temperature estimated by the thermal equilibrium temperature estimation unit is equal to or higher than the predetermined first threshold value.

In the overheating detection device according to the aspect of this disclosure, the thermal equilibrium temperature estimation unit may include a first received heat amount calculation unit calculating a first received heat amount receivable from the coil until the weakest part or the part in the vicinity of the weakest part reaches a heat resistance temperature of the weakest part or the part in the vicinity of the weakest part based on a temperature difference between the temperature of the weakest part or the part in the vicinity of the weakest part acquired by the temperature acquisition unit and the heat resistance temperature and a conduction heat amount calculation unit calculating a conduction heat amount heat-transferable from the coil to the weakest part or the part in the vicinity of the weakest part based on a temperature difference between the temperature of the coil and the temperature of the weakest part or the part in the vicinity of the weakest part acquired by the temperature acquisition unit, and the thermal equilibrium temperature estimation unit may estimate the thermal equilibrium temperature based on the first received heat amount calculated by the first received heat amount calculation unit and the conduction heat amount calculated by the conduction heat amount calculation unit. With this configuration, it is unnecessary to stop electrifying the coil or limit the amount of electrification of the coil at a point in time when the temperature of the coil becomes equal to or higher than the heat resistance temperature of the weakest part or the part in the vicinity of the weakest part, and thus the merchantability of the motor can be improved.

In the overheating detection device according to the aspect of this disclosure, the thermal equilibrium temperature estimation unit may include a second received heat amount calculation unit calculating a second received heat amount receivable from the coil until the weakest part or the part in the vicinity of the weakest part reaches a warning temperature lower than the heat resistance temperature of the weakest part or the part in the vicinity of the weakest part based on a temperature difference between the temperature of the weakest part or the part in the vicinity of the weakest part acquired by the temperature acquisition unit and the warning temperature, and estimate the thermal equilibrium temperature based on the second received heat amount calculated by the second received heat amount calculation unit and the conduction heat amount calculated by the conduction heat amount calculation unit, and the control portion may perform second predetermined control that differs from the first predetermined control and is to reduce a temperature of the motor in a case where the thermal equilibrium temperature estimated by the thermal equilibrium temperature estimation unit is equal to or higher than a second threshold value lower than the predetermined first threshold value. With this configuration, a procedure for reducing the motor temperature can be performed in a stage where the temperature of the motor does not rise much. The control portion may perform control for notifying message urging to reduce the motor temperature as the second predetermined control. With this configuration, a vehicle driver can be notified of an urging message for reducing the temperature of the motor in a stage where the temperature of the motor does not rise much.

In the overheating detection device according to the aspect of this disclosure, the conduction heat amount calculation unit may calculate the first received heat amount based on a temperature difference between a coil heat resistance temperature and the temperature of the weakest part or the part in the vicinity of the weakest part in a case where the acquired temperature of the weakest part or the part in the vicinity of the weakest part is equal to or lower than a predetermined temperature. With this configuration, it is possible to prevent the coil temperature from rising to the coil heat resistance temperature or more.

In the overheating detection device according to the aspect of this disclosure, the weakest part may be a magnet provided in the rotor. With this configuration, magnet demagnetization attributable to a rise in motor temperature can be prevented.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a hardware block diagram illustrating the hardware outline configuration of an overheating detection device according to an embodiment;
Fig. 2 is a schematic diagram illustrating an example of the structure of a motor;
Fig. 3 is an explanatory diagram illustrating the process of heat conduction in the motor;
Fig. 4 is a functional block diagram illustrating an example of the functional configuration of the overheating detection device;
Fig. 5 is a graph illustrating a change in coil overheating warning threshold value and a change in coil overheating abnormality threshold value depending on coil and stator temperatures; and
Fig. 6 is a flowchart illustrating an example of the flow of control processing of the overheating detection device.

DETAILED DESCRIPTION

An embodiment disclosed here will be described below with reference to accompanying drawings. The embodiment will be described as an example in which the embodiment is applied to an overheating detection device of a drive motor of an electric power steering device mounted in a vehicle. In addition, in the embodiment, a magnet provided in a rotor will be described as an example of the weakest part in the motor. In addition, a stator is positioned in the vicinity of the magnet, which is the weakest part, and thus the stator corresponds to a part in the vicinity of the weakest part.

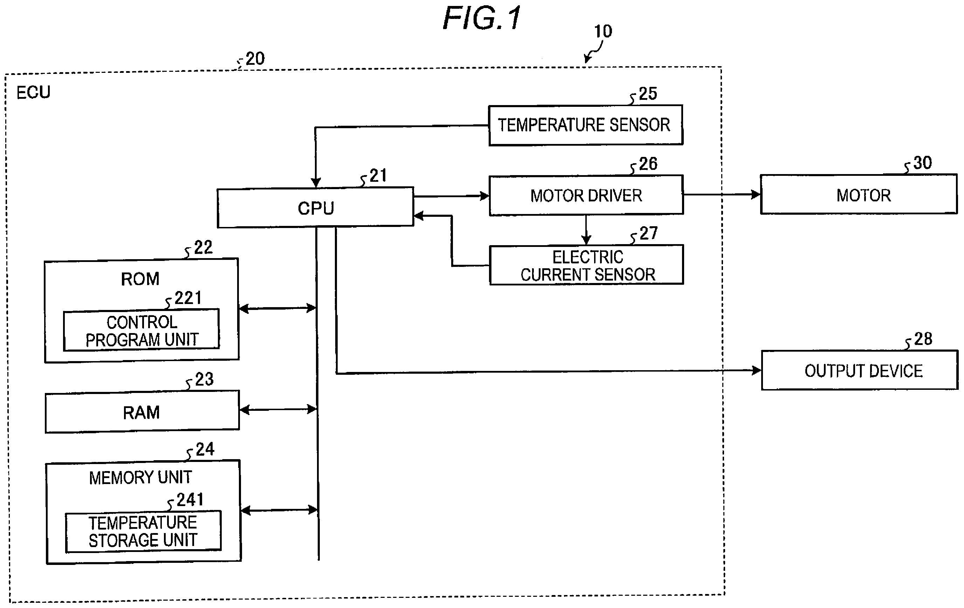

The hardware outline configuration of the overheating detection device will be described first. Fig. 1 is a hardware block diagram illustrating the hardware outline configuration of an overheating detection device 10. As illustrated in Fig. 1, the overheating detection device 10 is provided with an electronic control unit (ECU) 20 that is a motor overheating controller and an electric power steering drive motor 30 (hereinafter, simply referred to as "the motor 30").

The ECU 20 applies an appropriate assist force to the steering wheel (not illustrated in Fig. 1) of the vehicle by detecting the speed of the vehicle and the action state of the steering wheel and controlling the rotational state of the motor 30 in accordance with the action state of the steering wheel.

The ECU 20 is provided with a central processing unit (CPU) 21, a read only memory (ROM) 22, a random access memory (RAM) 23, and a memory unit 24. The CPU 21 performs various calculations. The ROM 22, which is a nonvolatile storage device, has, for example, a control program unit 221 that stores a control program executed by the CPU 21. The RAM 23 develops the control program stored in the control program unit 221 and temporarily stores various data that the CPU 21 uses for calculation processing. The memory unit 24 is a rewritable nonvolatile storage unit and has a temperature storage unit 241. The temperature storage unit 241 stores the most recent temperature of a coil (described later).

In addition, the ECU 20 is provided with a temperature sensor 25, a motor driver 26, an electric current sensor 27, and an output device 28. The temperature sensor 25 includes, for example, a thermistor and a thermocouple. The temperature sensor 25 measures the temperature inside the ECU 20. The motor driver 26 generates a drive signal for the motor 30, supplies the drive signal to the motor 30, and controls rotation of the motor 30. A three-phase brushless motor or the like is used as the motor 30. An electric power control element such as a MOSFET and an insulated gate bipolar transistor (IGBT) constitutes the motor driver 26. The electric current sensor 27 detects the value of the electric current that flows through the motor driver 26. In the ECU 20, the CPU 21 detects and monitors the value of the electric current flowing through the motor driver 26, which is detected by the electric current sensor 27. The CPU 21 controls, based on the electric current value, the drive signal for the motor 30 generated by the motor driver 26. The output device 28 is, for example, a display unit that is provided inside the vehicle and visually displays information to a driver. The output device 28 may be, for example, a speaker for voice-based information notification for a driver.

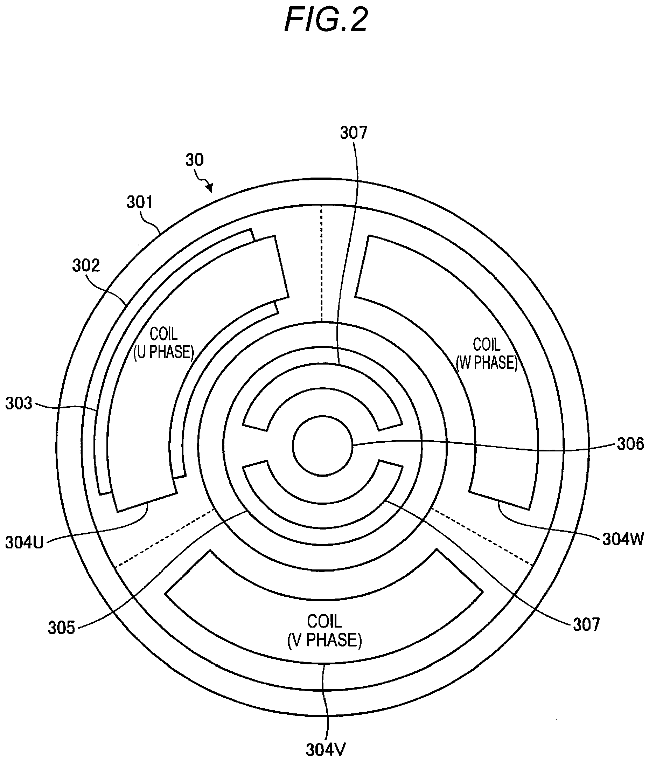

Next, the structure of the motor 30 will be described. In the embodiment, the motor 30 is a three-phase motor, and an example in which the coil is provided in the stator will be described. Fig. 2 is a schematic diagram illustrating an example of the structure of the motor.

The motor 30 is provided with a rotor 305 having magnets 307 of S-pole and N-pole permanent magnets in a substantially cylindrical case 301 and a stator 302 generating a magnetic field for applying a rotational force to the rotor 305. The rotor 305 is fixed to a shaft 306, which is the rotary shaft of the motor 30, and rotates together with the magnets 307 about the shaft 306. The stator 302 is fixed to the case 301. The stator 302 is made of, for example, iron. The stator 302 is provided with circular arc-shaped coils 304U, 304V, and 304W of the three phases of U, V, and W phases. The coils 304U, 304V, and 304W will be collectively referred to as a coil 304 below.

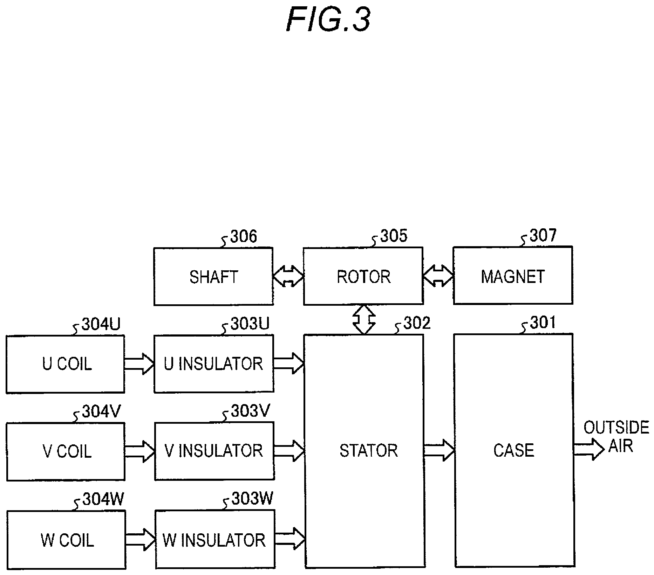

In addition, the stator 302 has an insulator 303 covering the outer peripheral portion of the coil 304. Specifically, an insulator 303U covers the coil 304U, an insulator 303V covers the coil 304V, and an insulator 303W covers the coil 304W (see Fig. 3). Note that the insulator 303U, the insulator 303V, and the insulator 303W will be collectively referred to as the insulator 303. The insulator 303 is a member that surrounds the coil 304 and maintains an insulation state between the coil 304 and the stator 302. The insulator 303 is, for example, resinous.

In the motor 30 that is formed as described above, an electric current is allowed to flow from the motor driver 26 to the coil 304. Then, the stator 302 generates a magnetic field, a rotational force is applied to the rotor 305 by the generated magnetic field, and the rotor 305 rotates.

Next, a process in which the heat that is generated by the coil 304 in the motor 30 is conducted to the motor 30 as a whole will be described. Fig. 3 is an explanatory diagram illustrating the process of the heat conduction in the motor 30. As illustrated in Fig. 3, electric power is supplied from the motor driver 26 to the three-phase coils 304U, 304V, and 304W, and an electric current flows through each coil 304. Heat is generated in the coil 304 as a result of the electric current flow through the coil 304. The temperature of the coil 304 rises as a result of the heat generation. The amount of the heat generated in the coil 304 can be calculated based on the resistance value of the coil 304 and the value of the electric current flowing through the coil 304.

The heat generated in the coil 304 is conducted to the insulator 303 of each phase in contact with the coil 304, and the insulator 303 stores the heat. The temperature of the heat-storing insulator 303 rises. Since the insulator 303 is a member formed of a resin or the like as described above, the insulator 303 is not highly resistant to heat although the insulator 303 is more resistant to heat than the magnet 307, which is the weakest part. Once the insulator 303 reaches a predetermined temperature or more, the insulator 303 melts, and then it might be impossible to maintain the insulation state between the coil 304 and the stator 302.

The heat stored in the insulator 303 is conducted by the stator 302 in contact with the insulator 303, and the stator 302 stores the heat. The temperature of the heat-storing stator 302 rises. The heat stored in the stator 302 is conducted to the case 301 in contact with the stator 302, and the case 301 stores the heat. The temperature of the heat-storing case 301 rises. The heat stored in the case 301 is conducted to outside air.

Note that the amount of the heat that is conducted from the coil 304 to the insulator 303 is determined by the amount of the heat that is accumulated in the coil 304, the temperature and the heat capacity of the insulator 303, and the heat transfer coefficient between the coil 304 and the insulator 303. Likewise, the amount of the heat that is conducted from the insulator 303 to the stator 302 is determined by the amount of the heat that is accumulated in the insulator 303, the temperature and the heat capacity of the stator 302, and the heat transfer coefficient between the stator 302 and

**EP 3 503 377 B1**

the insulator 303. Likewise, the amount of the heat that is conducted from the stator 302 to the case 301 is determined by the amount of the heat that is accumulated in the stator 302, the temperature and the heat capacity of the case 301, and the heat transfer coefficient between the stator 302 and the case 301.

The heat accumulated in the stator 302 is conducted to the rotor 305 via the air layer between the stator 302 and the rotor 305 (gap), and the rotor 305 stores the heat. The temperature of the heat-storing rotor 305 rises. The heat stored in the rotor 305 is conducted to the magnet 307 embedded in the rotor 305, and the magnet 307 stores the heat. The temperature of the heat-storing magnet 307 rises. The heat stored in the rotor 305 is conducted to the shaft 306 formed integrally with the rotor 305, and the shaft 306 stores the heat. The temperature of the heat-storing shaft 306 rises.

Note that a state where the movement of the heat generated in the coil 304 to the magnet 307, which is the weakest part, and the stator 302, which is a part in the vicinity of the weakest part, is completed will be referred to as thermal equilibrium.

Once the temperature of the magnet 307 reaches a certain temperature or more, a demagnetization phenomenon in which the magnetic force of the magnet 307 weakens occurs. Since this demagnetization is an irreversible phenomenon, the demagnetized magnetic force is not restored. Accordingly, it is necessary to keep the temperature of the magnet 307 below a demagnetization-triggering critical temperature. Therefore, in the motor 30, the magnet 307 is the weakest part that is most temperature-susceptible.

In the embodiment, the predetermined temperature of the stator 302, which is a member in the vicinity of the magnet 307, in a case where the temperature of the magnet 307 is equal to the demagnetization-triggering critical temperature is set as a stator heat resistance temperature (first threshold value: such as 120°C), and control is performed such that the stator 302 remains below the stator heat resistance temperature. As a result, control is performed such that the temperature of the magnet 307 is equal to or lower than the critical temperature and no demagnetization occurs.

To this end, the ECU 20 executes control for keeping the amount of the heat that is conducted from the coil 304 to the stator 302 (conduction heat amount to be described later) below a first received heat amount (described later) based on the first received heat amount, which is the amount of the heat that can be received until the stator 302 reaches the stator heat resistance temperature.

In addition, the ECU 20 executes control for keeping the conduction heat amount below a second received heat amount (described later) based on the second received heat amount, which is the amount of the heat that can be received until the temperature of the stator 302 reaches a predetermined stator warning temperature (second threshold value: such as 110°C). The stator warning temperature is a warning temperature that is lower than the stator heat resistance temperature yet relatively close to the stator heat resistance temperature. As a result, the ECU 20 executes control for preventing the temperature of the magnet 307 from reaching the critical temperature beforehand.

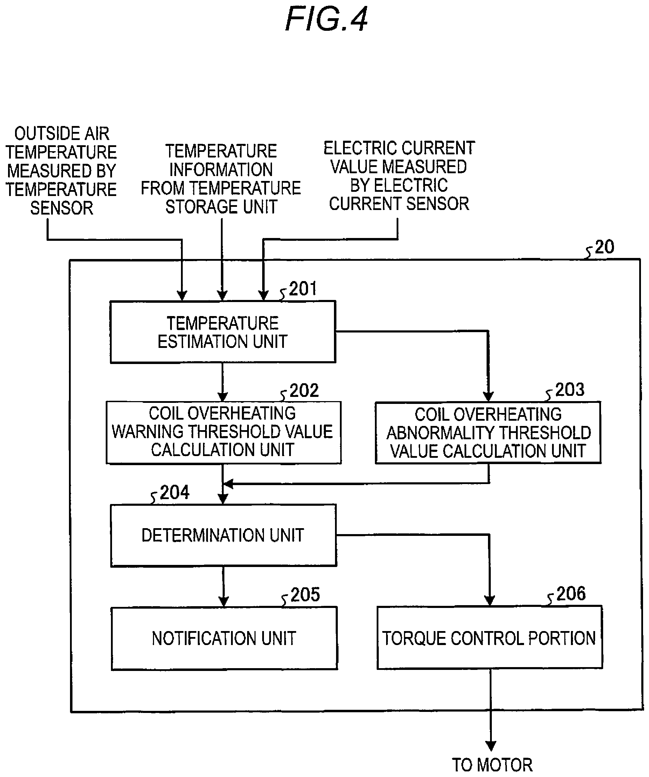

The functional configuration of the overheating detection device 10 will be described below. Fig. 4 is a functional block diagram illustrating an example of the functional configuration of the overheating detection device 10. As illustrated in Fig. 4, the ECU 20 of the overheating detection device 10 functions as a temperature estimation unit 201, a coil overheating warning threshold value calculation unit 202, a coil overheating abnormality threshold value calculation unit 203, a determination unit 204, a notification unit 205, and a torque control portion 206 by developing the control program stored in the control program unit 221 of the ROM 22 by the CPU 21 in the RAM 23 and executing the control program.

The temperature estimation unit 201 estimates (acquires) the temperature of the coil 304 based on the resistance value of the coil 304, the electric current value resulting from electrification from the motor driver 26 to the motor 30 and measured by the electric current sensor 27, and the temperature of the coil 304 stored in the temperature storage unit 241. Stored in the temperature storage unit 241 is the temperature of the coil 304 estimated when the motor 30 was driven last time. In addition, the temperature estimation unit 201 estimates (acquires) the temperature of the stator 302 based on the temperature measured by the temperature sensor 25. The temperature estimation unit 201 corresponds to a temperature acquisition unit.

The coil overheating abnormality threshold value calculation unit 203 calculates a coil overheating abnormality threshold value based on the estimated temperature of the stator 302. Here, the coil overheating abnormality threshold value refers to the temperature of the coil 304 that may rise until the temperature of the stator 302 reaches the stator heat resistance temperature. In other words, the coil overheating abnormality threshold value refers to a temperature to which the coil 304 may rise until the stator 302 reaches the stator heat resistance temperature based on the temperature difference between the temperature of the stator 302 and the stator heat resistance temperature.

In other words, the coil overheating abnormality threshold value calculation unit 203 estimates the temperature at which the coil 304 and the stator 302 are in thermal equilibrium based on the estimated temperature of the coil 304 and the estimated temperature of the stator 302 and calculates the coil overheating abnormality threshold value based on the estimated thermal equilibrium temperature and the stator heat resistance temperature. In other words, the coil overheating abnormality threshold value calculation unit 203 corresponds to a thermal equilibrium temperature estimation unit.

Specifically, the coil overheating abnormality threshold value calculation unit 203 first calculates the first received heat amount by the following equation and based on the heat capacity of the stator 302 and the temperature difference

5

between the temperature of the stator 302 and the stator heat resistance temperature.

First received heat amount = (stator heat resistance temperature - temperature of stator 302) × stator heat capacity)

In addition, the coil overheating abnormality threshold value calculation unit 203 calculates the conduction heat amount by the following equation and based on the heat capacity of the coil and the temperature difference between the coil overheating abnormality threshold value and the temperature of the stator 302.

Conduction heat amount = (coil overheating abnormality threshold value - temperature of stator 302) × coil heat capacity)

When the conduction heat amount is less than the first received heat amount, the temperature of the stator 302 remains below the stator heat resistance temperature even in a state where the coil 304 and the stator 302 are in thermal equilibrium. In other words, when the conduction heat amount is equal to or greater than the first received heat amount, the temperature of the stator 302 becomes equal to or higher than the stator heat resistance temperature in a case where the coil 304 and the stator 302 are thermally equilibrated. Accordingly, the coil overheating abnormality threshold value for the temperature of the stator 302 to remain below the stator heat resistance temperature is calculated by the equation that is expressed as first received heat amount=conduction heat amount. In other words, Equation 1 is as follows when the above equation of the first received heat amount and the conduction heat amount is applied as the relationship of first received heat amount=conduction heat amount.

Coil overheating abnormality threshold value (°C) = stator heat resistance temperature × (stator heat capacity / coil heat capacity) + stator temperature × (1 - (stator heat capacity / coil heat capacity)) ... (Equation 1)

Note that the coil overheating abnormality threshold value calculation unit 203 uses the equation for calculating the first received heat amount and the conduction heat amount in calculating the coil overheating abnormality threshold value, and thus the coil overheating abnormality threshold value calculation unit 203 corresponds to a first received heat amount calculation unit and a conduction heat amount calculation unit.

The coil overheating warning threshold value calculation unit 202 calculates a coil overheating warning threshold value based on the estimated temperature of the stator 302. Here, the coil overheating warning threshold value refers to the temperature of the coil 304 that may rise until the temperature of the stator 302 reaches the stator warning temperature (such as 110°C), which is the warning temperature that is lower than the stator heat resistance temperature yet relatively close to the stator heat resistance temperature. In other words, the coil overheating warning threshold value is a temperature to which the coil 304 may rise until the stator 302 reaches the stator warning temperature based on the temperature difference between the temperature of the stator 302 and the stator warning temperature.

In other words, the coil overheating warning threshold value calculation unit 202 estimates the temperature at which the coil 304 and the stator 302 are in thermal equilibrium based on the estimated temperature of the coil 304 and the estimated temperature of the stator 302 and calculates the coil overheating warning threshold value based on the estimated thermal equilibrium temperature and the stator warning temperature. In other words, the coil overheating warning threshold value calculation unit 202 corresponds to a thermal equilibrium temperature estimation unit.

Specifically, the coil overheating warning threshold value calculation unit 202 first calculates the second received heat amount by the following equation and based on the heat capacity of the stator 302 and the temperature difference between the temperature of the stator 302 and the stator warning temperature.

Second received heat amount = (stator warning temperature - temperature of stator 302) × stator heat capacity)

In addition, the coil overheating warning threshold value calculation unit 202 calculates the conduction heat amount by the following equation.

Conduction heat amount = (coil overheating abnormality threshold value - temperature of stator 302) × coil heat capacity)

When the conduction heat amount is less than the second received heat amount, the temperature of the stator 302 remains below the stator warning temperature even in a state where the coil 304 and the stator 302 are in thermal equilibrium. In other words, when the conduction heat amount is equal to or greater than the second received heat amount, the temperature of the stator 302 becomes equal to or higher than the stator warning temperature in a case where the coil 304 and the stator 302 are thermally equilibrated. Accordingly, the coil overheating warning threshold value for the temperature of the stator 302 to remain below the stator warning temperature is calculated by the equation that is expressed as second received heat amount=conduction heat amount. In other words, Equation 2 is as follows when the above equation of the second received heat amount and the conduction heat amount is applied as the relationship of second received heat amount=conduction heat amount.

Coil overheating warning threshold value (°C) = stator warning temperature × (stator heat capacity / coil heat capacity) + stator temperature × (1 - (stator heat capacity / coil heat capacity)) ... (Equation 2)

Note that the coil overheating warning threshold value calculation unit 202 uses the equation for calculating the second received heat amount and the conduction heat amount in calculating the coil overheating warning threshold value, and thus the coil overheating warning threshold value calculation unit 202 corresponds to a second received heat amount calculation unit and a conduction heat amount calculation unit.

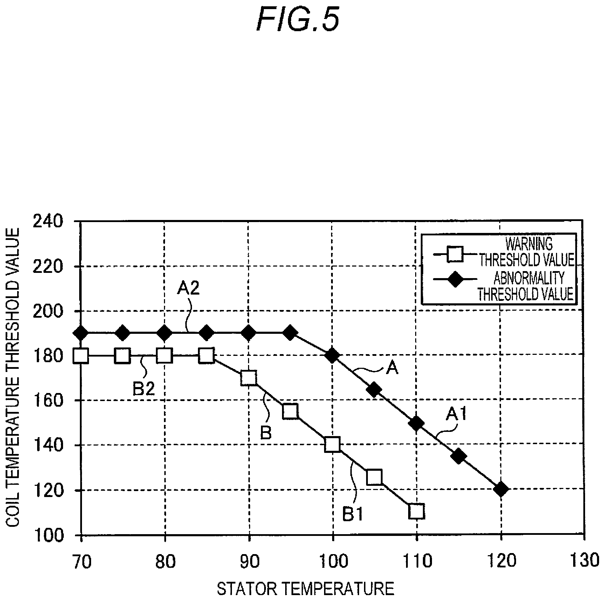

Next, Graph A illustrating the transition of the coil overheating abnormality threshold value and Graph B illustrating the transition of the coil overheating warning threshold value will be described. Fig. 5 is a graph illustrating the transitions of the coil overheating warning threshold value and the coil overheating abnormality threshold value.

Graph A is a graph illustrating the transition of the coil overheating abnormality threshold value. In graph A, the coil overheating abnormality threshold value is approximately 190°C in a case where the temperature of the stator 302 is approximately 95°C. This shows that the temperature of the stator 302 is a threshold value that may become equal to or higher than the stator heat resistance temperature (120°C) due to heat conduction when the temperature of the coil 304 becomes 190°C or more in a case where the temperature of the stator 302 is approximately 95°C. In other words, this shows that the temperature of the stator 302 remains below the stator heat resistance temperature, even when the temperature of the coil 304 rises to 190°C, in a case where the temperature of the stator 302 is approximately 95°C. Likewise, the coil overheating abnormality threshold value is approximately 180°C in a case where the temperature of the stator 302 is approximately 100°C, the coil overheating abnormality threshold value is approximately 150°C in a case where the temperature of the stator 302 is approximately 110°C, and the coil overheating abnormality threshold value is approximately 120°C in a case where the temperature of the stator 302 is approximately 120°C. In other words, when the temperature of the coil 304 does not exceed the coil overheating abnormality threshold value, the temperature of the stator 302 remains below the stator heat resistance temperature. In Graph A, Graph A1 in which the temperature of the stator 302 is between approximately 95°C and approximately 120°C (that is, the stator heat resistance temperature) is a linear downward-sloping graph. In other words, between approximately 95°C and approximately 120°C, the coil overheating abnormality threshold value decreases as the temperature of the stator 302 rises. The coil overheating abnormality threshold value in Graph A1 is calculated based on Equation 1.

In Graph A2 of Graph A, the temperature of the stator 302 is relatively low and ranges from approximately 70°C to approximately 95°C (predetermined temperature or less). In Graph A2, the coil overheating abnormality threshold values are constant at approximately 190°C without exception. The 190°C is a temperature at which the coating of the coil 304 and the insulator 303 may dissolve or a coil heat resistance temperature that is close to that temperature. Accordingly, the coil heat resistance temperature is set as the coil overheating abnormality threshold value. As described above, Graph A illustrating the transition of the coil overheating abnormality threshold value has Graph A1 and Graph A2. In Graph A1, the coil overheating abnormality threshold value is a threshold value that decreases as the temperature of the stator 302 rises. In Graph A2, the coil overheating abnormality threshold value is the coil heat resistance temperature that is constant regardless of the temperature of the stator 302.

Regarding the region of Graph A1, the coil overheating abnormality threshold value calculation unit 203 calculates the coil overheating abnormality threshold value by using Equation 1. Regarding the region of Graph A2, the coil overheating abnormality threshold value calculation unit 203 sets the coil heat resistance temperature as the coil overheating abnormality threshold value without using Equation 1.

Graph B is a graph illustrating the transition of the coil overheating warning threshold value. In Graph B, the coil overheating warning threshold value is approximately 180°C in a case where the temperature of the stator 302 is approximately 85°C, the coil overheating warning threshold value is approximately 170°C in a case where the temperature of the stator 302 is approximately 90°C, the coil overheating warning threshold value is approximately 140°C in a case where the temperature of the stator 302 is approximately 100°C, and the coil overheating warning threshold value is approximately 110°C in a case where the temperature of the stator 302 is approximately 110°C. In other words, when the temperature of the coil 304 does not exceed the coil overheating warning threshold value, the temperature of the stator 302 remains below the stator warning temperature. In Graph B, Graph B1 in which the temperature of the stator 302 is between approximately 85°C and approximately 110°C (that is, the stator warning temperature) is a linear downward-sloping graph. In other words, between approximately 85°C and approximately 110°C, the coil overheating warning threshold value decreases as the temperature of the stator 302 rises. Note that the coil overheating warning threshold value in Graph B1 is calculated based on Equation 2.

In Graph B2 of Graph B, the temperature of the stator 302 is from approximately 70°C to approximately 85°C. In Graph B2, the coil overheating warning threshold values are constant at approximately 180°C without exception. The 180°C is a predetermined temperature that is lower by a certain temperature than the coil heat resistance temperature. This temperature is a coil warning temperature at which a driver is notified of the fact that the temperature of the coil 304 is abnormally high. Accordingly, the coil warning temperature is used as the coil overheating warning threshold value. As described above, Graph B illustrating the transition of the coil overheating warning threshold value has Graph B1 and Graph B2. In Graph B1, the coil overheating warning threshold value is a threshold value that decreases as the temperature of the stator 302 rises. In Graph B2, the threshold value is the constant coil warning temperature.

Regarding the region of Graph AB, the coil overheating warning threshold value calculation unit 202 calculates the coil overheating warning threshold value by using Equation 2. Regarding the region of Graph B2, the coil overheating warning threshold value calculation unit 202 sets the coil warning temperature as the coil overheating warning threshold value without using Equation 2.

The determination unit 204 determines whether or not to notify a driver of a warning based on the temperature of the coil 304 estimated by the temperature estimation unit 201 and the coil overheating warning threshold value calculated by the coil overheating warning threshold value calculation unit 202. Specifically, when the temperature of the coil 304 estimated by the temperature estimation unit 201 is lower than the coil overheating warning threshold value (that is, when the conduction heat amount is smaller than the second received heat amount), the determination unit 204 determines that the warning notification for the driver does not have to be performed as the temperature of the stator 302 remains below the stator warning temperature even in a state where the coil 304 and the stator 302 are in thermal equilibrium. When the temperature of the coil 304 estimated by the temperature estimation unit 201 is equal to or higher than the coil overheating warning threshold value (that is, when the conduction heat amount is equal to or greater than the second received heat amount), the determination unit 204 determines that the warning notification for the driver needs to be performed as the temperature of the stator 302 may become equal to or higher than the stator warning temperature.

The determination unit 204 determines whether or not to notify a driver of a warning based on the temperature of the coil 304 estimated by the temperature estimation unit 201 and the coil overheating abnormality threshold value calculated by the coil overheating abnormality threshold value calculation unit 203. The determination unit 204 determines whether to perform control for limiting the torque of the motor 30 or control for stopping the motor 30 based on the temperature of the coil 304 estimated by the temperature estimation unit 201 and the coil overheating abnormality threshold value calculated by the coil overheating abnormality threshold value calculation unit 203. Specifically, when the temperature of the coil 304 estimated by the temperature estimation unit 201 is lower than the coil overheating abnormality threshold value (that is, when the conduction heat amount is smaller than the first received heat amount), the determination unit 204 determines that the notification for the driver and the torque control do not have to be performed as the temperature of the stator 302 remains below the stator heat resistance temperature even in a state where the coil 304 and the stator 302 are in thermal equilibrium. When the temperature of the coil 304 estimated by the temperature estimation unit 201 is equal to or higher than the coil overheating abnormality threshold value (that is, when the conduction heat amount is equal to or greater than the first received heat amount), the determination unit 204 determines that the warning notification for the driver and the torque control need to be performed as the temperature of the stator 302 may become equal to or higher than the stator heat resistance temperature.

In a case where the determination unit 204 determines based on the coil overheating warning threshold value that the determination unit 204 needs to perform the warning notification for the driver, the notification unit 205 notifies the output device 28 of an urging message for lowering the temperature of the motor 30. It is desirable that the message is a warning for urging the speed of the vehicle to be reduced or the vehicle to be stopped for a decrease in the temperature of the motor 30. In addition, voice guidance or a voice alarm may be used for the message. The message may also be one that uses both display and voice. In addition, in a case where the determination unit 204 determines based on the coil overheating abnormality threshold value that the determination unit 204 needs to perform the warning notification for the driver, the notification unit 205 notifies the output device 28 of an urging message for lowering the temperature of the motor 30. Although this notification may be a warning notification urging the speed of the vehicle to be reduced or the vehicle to be stopped, it is desirable that the notification is a message that more intensively informs a driver of an imminent risk.

The torque control portion 206 executes control for decelerating the vehicle or stopping the vehicle by limiting the torque of the motor 30 in a case where the determination unit 204 determines that the control for limiting the torque of the motor 30 or the control for stopping the motor 30 needs to be performed. More specifically, the torque control portion 206 decreases the amount of the electric current flowing through the coil 304 of the motor 30 or turns the amount into zero by controlling the electric current flowing through the motor driver 26, and then the torque of the motor 30 is limited and the motor 30 is decelerated or stopped. The determination unit 204, the notification unit 205, and the torque control portion 206 correspond to control portions.

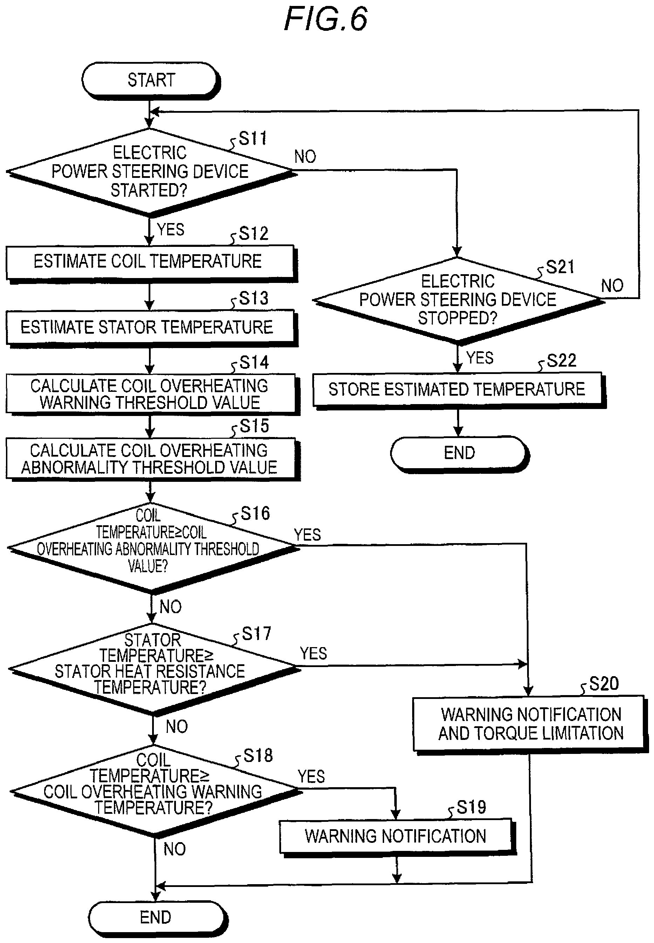

Next, control processing of the overheating detection device 10 will be described. Fig. 6 is a flowchart illustrating an example of the procedure of the control processing of the overheating detection device 10. As illustrated in Fig. 6, the ECU 20 determines whether or not the electric power steering device has been started by a driver operating the steering wheel (Step S11). In a case where it is determined that the electric power steering device has been started (Yes in Step S11), the temperature estimation unit 201 estimates the temperature of the coil 304 (Step S12). Next, the temperature estimation unit 201 estimates the temperature of the stator 302 (Step S13). Next, the coil overheating warning threshold value calculation unit 202 calculates the coil overheating warning threshold value based on Equation 2 (Step S14). Next, the coil overheating abnormality threshold value calculation unit 203 calculates the coil overheating abnormality threshold value based on Equation 1 (Step S15).

Next, based on the calculated coil overheating warning threshold value and coil overheating abnormality threshold value, the determination unit 204 determines whether or not the temperature of the coil 304 estimated by the temperature estimation unit 201 is equal to or higher than the coil overheating abnormality threshold value (Step S16). In a case where the determination unit 204 determines that the temperature of the coil 304 estimated by the temperature estimation unit 201 is equal to or higher than the coil overheating abnormality threshold value (Yes in Step S16), the notification unit 205 drives the output device 28 and notifies the driver of an urging message for reducing the temperature of the motor 30 as predetermined control (Step S20). It is desirable that this message is to more intensively inform the driver of an imminent risk. In addition, in a case where the determination unit 204 determines that the temperature of the coil 304 estimated by the temperature estimation unit 201 is equal to or higher than the coil overheating abnormality threshold value (Yes in Step S16), the torque control unit 206 executes control for decelerating or stopping the vehicle by limiting the torque of the motor 30 as predetermined control (Step S20). Then, the ECU 20 terminates the processing and returns to Start.

In a case where the determination unit 204 determines that the temperature of the coil 304 estimated by the temperature estimation unit 201 is below the coil overheating abnormality threshold value (No in Step S16), the determination unit 204 subsequently determines whether or not the temperature of the stator 302 estimated by the temperature estimation unit 201 is equal to or higher than the stator heat resistance temperature (Step S17). In a case where the determination unit 204 determines that the temperature of the stator 302 estimated by the temperature estimation unit 201 is equal to or higher than the stator heat resistance temperature (Yes in Step S17), the notification unit 205 performs the above-described urging message notification for motor temperature reduction as predetermined control (Step S20). In a case where the determination unit 204 determines that the temperature of the stator 302 estimated by the temperature estimation unit 201 is equal to or higher than the stator heat resistance temperature (Yes in Step S17), the torque control portion 206 executes control for decelerating or stopping the vehicle by limiting the torque of the motor 30 as predetermined control (Step S20). Then, the ECU 20 terminates the processing and returns to Start.

In a case where it is determined that the temperature of the stator 302 estimated by the temperature estimation unit 201 is below the stator heat resistance temperature (No in Step S17), the determination unit 204 determines whether or not the temperature of the coil 304 estimated by the temperature estimation unit 201 is equal to or higher than the coil overheating warning threshold value (Step S18). In a case where the determination unit 204 determines that the temperature of the coil 304 estimated by the temperature estimation unit 201 is equal to or higher than the coil overheating warning threshold value (Yes in Step S18), the notification unit 205 drives the output device 28 and notifies the driver of an urging message for reducing the temperature of the motor 30 (Step S19). Then, the ECU 20 terminates the processing and returns to Start. In a case where the determination unit 204 determines that the temperature of the coil 304 estimated by the temperature estimation unit 201 is below the coil overheating warning threshold value (No in Step S18), the ECU 20 terminates the processing and returns to Start.

In a case where it is determined in Step S11 that the electric power steering device is not started (No in Step S11), the ECU 20 subsequently determines whether or not the electric power steering device has stopped operating (Step S21). In a case where the ECU 20 determines that the electric power steering device has stopped operating (Yes in Step S21), the ECU 20 stores, in the temperature storage unit 241, the estimated temperature of every part such as the case 301, the stator 302, and the coil 304 at the point in time when the operation was stopped (Step S22). Then, the ECU 20 terminates the processing and returns to Start. The ECU 20 returns to Step S11 in a case where the ECU 20 determines that the operation of the electric power steering device is not stopped (No in Step S21).

According to the overheating detection device of this embodiment, the temperature estimation unit 201 acquires the temperature of the coil 304 provided in the stator 302 of the motor 30 having the rotor 305 and the stator 302 and the temperature of the stator 302, which is a part in the vicinity of the most temperature-susceptible magnet 307. The coil overheating abnormality threshold value calculation unit 203 estimates the temperature at which the coil 304 and the stator 302 are in thermal equilibrium based on the acquired temperatures of the coil 304 and the stator 302. In a case where the determination unit 204 determines that the estimated thermal equilibrium temperature has become equal to or higher than the stator heat resistance temperature, the notification unit 205 or the torque control portion 207 performs predetermined control. Therefore, according to the overheating detection device of the embodiment, it is unnecessary to stop electrifying the coil 304 or limit the amount of electrification of the coil 304 at a point in time when the temperature of the coil 304 becomes equal to or higher than the stator heat resistance temperature, and thus the merchantability of the motor 30 can be improved.

In addition, according to the overheating detection device of the embodiment, the torque control portion 206 performs control for limiting the torque of the motor 30 as predetermined control. As a result, according to the overheating detection device of the embodiment, the torque of the motor 30 can be automatically limited.

In addition, according to the overheating detection device of the embodiment, the coil overheating abnormality threshold value calculation unit 203 calculates, based on the temperature difference between the heat resistance temperature of the stator 302 and the temperature of the stator 302 estimated by the temperature estimation unit 201, the first received heat amount that can be received from the coil 304 until the stator 302 reaches the heat resistance temperature, calculates the conduction heat amount that is heat-transferable from the coil 304 to the stator 302 based on the temperature difference between the temperature of the stator 302 and the temperature of the coil 304 acquired by the temperature estimation unit 201, and estimates the thermal equilibrium temperature based on the first received heat amount and the conduction heat amount. Therefore, according to the overheating detection device of the embodiment, it is unnecessary to stop electrifying the coil 304 or limit the amount of electrification of the coil 304 at a point in time when the temperature of the coil 304 becomes equal to or higher than the stator heat resistance temperature, and thus the merchantability of the motor 30 can be improved.

In addition, according to the overheating detection device of the embodiment, the coil overheating warning threshold value calculation unit 202 calculates, based on the temperature difference between the temperature of the stator 302 estimated by the temperature estimation unit 201 and the stator warning temperature lower than the heat resistance temperature of the stator 302, the second received heat amount that can be received from the coil 304 until the stator 302 reaches the stator warning temperature, calculates the conduction heat amount that is heat-transferable from the coil 304 to the stator 302 based on the temperature difference between the temperature of the stator 302 and the temperature of the coil 304 acquired by the temperature estimation unit 201, and estimates the thermal equilibrium temperature based on the second received heat amount and the conduction heat amount. In a case where the conduction heat amount is equal to or greater than the second received heat amount, the notification unit 205 performs the urging message notification for reducing the temperature of the motor 30. Therefore, according to the overheating detection device of the embodiment, a driver can be notified of an urging message for reducing the temperature of the motor 30 in a stage where the temperature of the motor 30 does not rise much.

In addition, according to the overheating detection device of the embodiment, in a case where the acquired temperature of the stator 302 is equal to or less than a predetermined temperature, the coil overheating abnormality threshold value calculation unit 203 calculates the first received heat amount based on the temperature difference between the coil heat resistance temperature and the temperature of the stator 302. Therefore, according to the overheating detection device of the embodiment, it is possible to prevent the temperature of the coil 304 from rising to the coil heat resistance temperature or more.

In addition, according to the overheating detection device of the embodiment, the weakest part is, for example, the magnet 307 provided in the rotor 305. Therefore, according to the overheating detection device of the embodiment, demagnetization of the magnet 307 attributable to a rise in temperature can be prevented.

Although an embodiment disclosed here has been exemplified above, the embodiment and modification examples are merely examples and are not intended to limit the scope of the embodiments disclosed here. The embodiment and modification examples can be implemented in various other forms and various omissions, substitutions, combinations, and changes can be made without departing from the spirit of the embodiments disclosed here. The configurations and shapes of each embodiment and each modification example can also be partially replaced.

For example, in the embodiment, message notification for a driver and motor torque limiting control are performed as predetermined control in a case where the temperature of the coil 304 is equal to or higher than the coil overheating abnormality threshold value. As the predetermined control, either one of the message notification for a driver and the motor torque limitation may be performed instead.

In the embodiment, the temperatures of the coil 304 and the stator 302 are acquired by estimation. The temperatures of the coil 304 and the stator 302 may be acquired by measurement instead.

In the embodiment, the magnet 307 is the weakest part. A part other than the magnet 307 (such as the insulator 303) may be the weakest part instead.

In the embodiment, torque control and message notification are predetermined control. The predetermined control does not have to be the torque control and the message notification.

The control program executed by the overheating detection device 10 of the embodiment may be configured such that the program is an installable or executable file and provided after being recorded in a computer-readable recording medium such as a CD-ROM, a flexible disk (FD), a CD-R, and a digital versatile disk (DVD).

The control program executed by the overheating detection device 10 of the embodiment may be configured to be stored on a computer connected to a network such as the Internet and provided by being downloaded via the network. The control program executed by the overheating detection device 10 of the embodiment may be provided or distributed via a network such as the Internet.

The control program executed by the overheating detection device 10 of the embodiment may be provided by being incorporated in a ROM or the like in advance.

**Claims**

1. An overheating detection device (10) of an electric power steering wheel device comprising:

   a temperature acquisition unit (201) configured to acquire a temperature of a coil (304) provided in a stator (302) of a three-phase brushless motor (30) comprising a rotor (305) and the stator (302) and a temperature of a magnet (307) in the motor (30) or a temperature of the stator (302);
   a thermal equilibrium temperature estimation unit (202, 203) configured to estimate a thermal equilibrium temperature at which the coil (304) and the magnet (307) or the stator (302) are in thermal equilibrium based on the temperature of the coil (304) and the temperature of the magnet (307) or the stator (302) acquired by the temperature acquisition unit (201), wherein the thermal equilibrium is a state where the movement of the heat from the coil (304) to the magnet (307) or the stator (302) is completed; and
   a control portion (21) configured to perform first predetermined control in a case where the thermal equilibrium temperature estimated by the thermal equilibrium temperature estimation unit (202, 203) is equal to or higher than a predetermined first threshold value, **characterized by**:

   the thermal equilibrium temperature estimation unit (202, 203) includes

   a first received heat amount calculation unit configured to

   calculate a coil overheating abnormality threshold corresponding to a first received heat amount receivable from the coil (304) until the magnet (307) or the stator (302) reaches a heat resistance temperature, based on the temperature difference between the temperature of the magnet (307) or the stator (302) and the magnet or the stator heat resistance temperature, wherein the magnet or the stator heat resistance temperature corresponds to the demagnetization-triggering critical temperature and
   calculate the first received heat amount receivable from the coil (304) based on the heat capacity of the stator (302) or magnet (307) and coil (304), and

   a conduction heat amount calculation unit configured to

   calculate a conduction heat amount heat-transferable from the coil (304) to the magnet (307) or the stator (302) based on a temperature difference between the temperature of the coil (304) and the temperature of the magnet (307) or the stator (302) acquired by the temperature acquisition unit (201), and
   calculate the conduction heat amount heat-transferable from the coil (304) based on the heat capacity of the stator (302) or magnet (307) and coil (304),

   and
   the thermal equilibrium temperature estimation unit (203) is configured to estimate the thermal equilibrium temperature based on the first received heat amount calculated by the first received heat amount calculation unit and the conduction heat amount calculated by the conduction heat amount calculation unit.

**2.** The overheating detection device (10) according to claim 1, wherein
the control portion (21) is configured to perform control for limiting torque of the motor (30) as the first predetermined control.

**3.** The overheating detection device (10) according to claim 1, wherein
the thermal equilibrium temperature estimation unit (202, 203) includes a second received heat amount calculation unit configured to calculate a second received heat amount receivable from the coil (304) until the magnet (307) or the stator (302) reaches a warning temperature lower than the heat resistance temperature of the magnet (307) or the stator (302) based on a temperature difference between the temperature of the magnet (307) or the stator (302) acquired by the temperature acquisition unit (201) and the warning temperature, and is configured to estimate the thermal equilibrium temperature based on the second received heat amount calculated by the second received heat amount calculation unit and the conduction heat amount calculated by the conduction heat amount calculation unit, and
the control portion (21) is configured to perform second predetermined control that differs from the first predetermined control and is to reduce a temperature of the motor (30) in a case where the thermal equilibrium temperature estimated by the thermal equilibrium temperature estimation unit (202, 203) is equal to or higher than a second threshold value lower than the predetermined first threshold value.

**4.** The overheating detection device (10) according to claim 3, wherein
the control portion (21) is configured to perform control for notifying message urging to reduce the motor temperature as the second predetermined control.

**5.** The overheating detection device (10) according to any one of claims 1, and 3 to 4, wherein
the conduction heat amount calculation unit is configured to calculate the first received heat amount based on a temperature difference between a coil heat resistance temperature and the temperature of the magnet (307) or the stator (302) in a case where the acquired temperature of the magnet (307) or the stator (302) is equal to or lower than a predetermined temperature.


**Patentansprüche**

**1.** Überhitzungsdetektionsvorrichtung (10) einer elektrischen Servolenkradvorrichtung, umfassend:

eine Temperaturerfassungseinheit (201), die dazu ausgebildet ist, eine Temperatur einer Spule (304), die in einem Stator (302) eines bürstenlosen Drehstrommotors (30) bereitgestellt ist, der einen Rotor (305) und den Stator (302) umfasst, und eine Temperatur eines Magneten (307) in dem Motor (30) oder eine Temperatur des Stators (302) zu erfassen,
eine Wärmegleichgewichtstemperaturschätzeinheit (202, 203), die dazu ausgebildet ist, eine Wärmegleichgewichtstemperatur, bei der die Spule (304) und der Magnet (307) oder der Stator (302) im Wärmegleichgewicht sind, basierend auf der Temperatur der Spule (304) und der Temperatur des Magneten (307) oder des Stators (302), die durch die Temperaturerfassungseinheit (201) erfasst werden, zu schätzen, wobei das Wärmegleichgewicht ein Zustand ist, in dem die Bewegung der Wärme von der Spule (304) zu dem Magneten (307) oder dem Stator (302) abgeschlossen ist, und
eine Steuerungssektion (21), die dazu ausgebildet ist, eine erste vorbestimmte Steuerung in einem Fall durchzuführen, in dem die durch die Wärmegleichgewichtstemperaturschätzeinheit (202, 203) geschätzte Wärmegleichgewichtstemperatur größer gleich einem vorbestimmten ersten Schwellenwert ist, **dadurch gekennzeichnet, dass**:
die Wärmegleichgewichtstemperaturschätzeinheit (202, 203) umfasst:

eine erste Einheit zur Berechnung aufgenommener Wärme, die dazu ausgebildet ist,

basierend auf der Temperaturdifferenz zwischen der Temperatur des Magneten (307) oder des Stators (302) und der Magnet- oder der Statorwärmebeständigkeitstemperatur eine Spulenüberhitzungsabnormitätsschwelle, die einer ersten Menge aufgenommener Wärme entspricht, welche von der Spule (304) aufnehmbar ist, bis der Magnet (307) oder der Stator (302) eine Wärmebeständigkeitstemperatur erreicht, zu berechnen, wobei die Magnet- oder die Statorwärmebeständigkeitstemperatur der kritischen Entmagnetisierungsauslösetemperatur entspricht, und
basierend auf der Wärmekapazität des Stators (302) oder des Magneten (307) und der Spule (304) die erste Menge aufgenommener Wärme, die von der Spule (304) aufnehmbar ist, zu berechnen, und

eine Einheit zur Berechnung der Konduktionswärmemenge, die dazu ausgebildet ist,

basierend auf einer Temperaturdifferenz zwischen der Temperatur der Spule (304) und der Temperatur des Magneten (307) oder des Stators (302), die durch die Temperaturerfassungseinheit (201) erfasst werden, eine Konduktionswärmemenge, die von der Spule (304) auf den Magneten (307) oder den Stator (302) wärmeübertragbar ist, zu berechnen und
die von der Spule (304) wärmeübertragbare Konduktionswärmemenge basierend auf der Wärmekapazität des Stators (302) oder des Magneten (307) und der Spule (304) zu berechnen,

und
die Wärmegleichgewichtstemperaturschätzeinheit (203) dazu ausgebildet ist, die Wärmegleichgewichtstemperatur basierend auf der durch die erste Einheit zur Berechnung aufgenommener Wärme berechneten ersten Menge aufgenommener Wärme und der durch die Einheit zur Berechnung der Konduktionswärmemenge berechneten Konduktionswärmemenge zu schätzen.

2. Überhitzungsdetektionsvorrichtung (10) nach Anspruch 1, wobei die Steuerungssektion (21) dazu ausgebildet ist, als erste vorbestimmte Steuerung eine Steuerung zum Begrenzen des Drehmoments des Motors (30) durchzuführen.

3. Überhitzungsdetektionsvorrichtung (10) nach Anspruch 1, wobei
die Wärmegleichgewichtstemperaturschätzeinheit (202, 203) eine zweite Einheit zur Berechnung aufgenommener Wärme umfasst, die dazu ausgebildet ist, eine zweite Menge aufgenommener Wärme, die von der Spule (304) aufnehmbar ist, bis der Magnet (307) oder der Stator (302) eine Warntemperatur erreichen, die niedriger als die Wärmebeständigkeitstemperatur des Magneten (307) oder des Stators (302) ist, basierend auf einer Temperaturdifferenz zwischen der Temperatur des Magneten (307) oder des Stators (302), welche durch die Temperaturerfassungseinheit (201) erfasst wird, und der Warntemperatur zu berechnen, und dazu ausgebildet ist, die Wärmegleichgewichtstemperatur basierend auf der durch die zweite Einheit zur Berechnung aufgenommener Wärme berechneten zweiten Menge aufgenommener Wärme und der durch die Einheit zur Berechnung der Konduktionswärmemenge berechneten Konduktionswärmemenge zu schätzen, und
die Steuerungssektion (21) dazu ausgebildet ist, eine zweite vorbestimmte Steuerung durchzuführen, die sich von der ersten vorbestimmten Steuerung unterscheidet und dazu dient, eine Temperatur des Motors (30) in einem Fall zu reduzieren, in dem die durch die Wärmegleichgewichtstemperaturschätzeinheit (202, 203) geschätzte Wärmegleichgewichtstemperatur größer oder gleich einem zweiten Schwellenwert ist, der kleiner als der vorbestimmte erste Schwellenwert ist.

4. Überhitzungsdetektionsvorrichtung (10) nach Anspruch 3, wobei
die Steuerungssektion (21) dazu ausgebildet ist, als zweite vorbestimmte Steuerung eine Steuerung zum Erzeugen einer Nachricht durchzuführen, die dazu auffordert, die Motortemperatur zu reduzieren.

5. Überhitzungsdetektionsvorrichtung (10) nach einem der Ansprüche 1 und 3 bis 4, wobei
die Einheit zur Berechnung der Konduktionswärmemenge dazu ausgebildet ist, in einem Fall, in dem die erfasste Temperatur des Magneten (307) oder des Stators (302) kleiner oder gleich einer vorbestimmten Temperatur ist, die erste Menge aufgenommener Wärme basierend auf einer Temperaturdifferenz zwischen einer Spulenwärmebeständigkeitstemperatur und der Temperatur des Magneten (307) oder des Stators (302) zu berechnen.

## Revendications

1. Dispositif de détection de surchauffe (10) d'un dispositif de direction à assistance électrique :

une unité d'acquisition de température (201) configurée pour acquérir une température d'une bobine (304) prévue dans un stator (302) d'un moteur sans balai triphasé (30) comprenant un rotor (305) et le stator (302) et une température d'un aimant (307) dans le moteur (30) ou une température du stator (302) ;
une unité d'estimation de température d'équilibre thermique (202, 203) configurée pour estimer une température d'équilibre thermique à laquelle la bobine (304) et l'aimant (307) ou le stator (302) sont en équilibre thermique sur la base de la température de la bobine (304) et de la température de l'aimant (307) ou du stator (302) acquise par l'unité d'acquisition de température (201), l'équilibre thermique étant un état dans lequel le mouvement de la chaleur depuis la bobine (304) jusqu'à l'aimant (307) ou au stator (302) est terminé ; et

une portion de contrôle (21) configurée pour réaliser une première commande prédéterminée dans un cas où la température d'équilibre thermique estimée par l'unité d'estimation de température d'équilibre thermique (202, 203) est égale ou supérieure à une première valeur de seuil prédéterminée, **caractérisé par** :

l'unité d'estimation de température d'équilibre thermique (202, 203) qui comprend

une première unité de calcul de quantité de chaleur reçue configurée pour

calculer un seuil d'anomalie de surchauffe de bobine correspondant à une première quantité de chaleur reçue pouvant être reçue de la bobine (304) jusqu'à ce que l'aimant (307) ou le stator (302) atteigne une température de résistance thermique, sur la base de la différence de température entre la température de l'aimant (307) ou du stator (302) et de la température de résistance thermique de l'aimant ou du stator, la température de résistance thermique de l'aimant ou du stator correspondant à la température critique de déclenchement de démagnétisation et

calculer la première quantité de chaleur reçue pouvant être reçue de la bobine (304) sur la base de la capacité thermique du stator (302) ou de l'aimant (307) et de la bobine (304), et

une unité de calcul de quantité de chaleur de conduction configurée pour

calculer une quantité de chaleur de conduction de transfert de chaleur possible depuis la bobine (304) jusqu'à l'aimant (307) ou au stator (302) sur la base d'une différence de température entre la température de la bobine (304) et la température de l'aimant (307) ou du stator (302) acquise par l'unité d'acquisition de température (201), et

calculer la quantité de chaleur de conduction de transfert de chaleur possible depuis la bobine (304) sur la base de la capacité thermique du stator (302) ou de l'aimant (307) et de la bobine (304), et

l'unité d'estimation de température d'équilibre thermique (203) est configurée pour estimer la température d'équilibre thermique sur la base de la première quantité de chaleur reçue calculée par la première unité de calcul de quantité de chaleur reçue et de la quantité de chaleur de conduction calculée par l'unité de calcul de quantité de chaleur de conduction.

2. Dispositif de détection de surchauffe (10) selon la revendication 1, dans lequel
la portion de contrôle (21) est configurée pour réaliser une commande pour limiter un couple du moteur (30) comme première commande prédéterminée.

3. Dispositif de détection de surchauffe (10) selon la revendication 1, dans lequel
l'unité d'estimation de température d'équilibre thermique (202, 203) comprend une deuxième unité de calcul de quantité de chaleur reçue configurée pour calculer une deuxième quantité de chaleur reçue pouvant être reçue depuis la bobine (304) jusqu'à ce que l'aimant (307) ou le stator (302) atteigne une température d'avertissement plus basse que la température de résistance thermique de l'aimant (307) ou du stator (302) sur la base d'une différence de température entre la température de l'aimant (307) ou du stator (302) acquise par l'unité d'acquisition de température (201) et la température d'avertissement, et est configurée pour estimer la température d'équilibre thermique sur la base de la deuxième quantité de chaleur reçue calculée par la deuxième unité de calcul de quantité de chaleur reçue et de la quantité de chaleur de conduction calculée par l'unité de calcul de quantité de chaleur de conduction, et

la portion de contrôle (21) est configurée pour réaliser une deuxième commande prédéterminée qui diffère de la première commande prédéterminée et pour réduire une température du moteur (30) dans un cas où la température d'équilibre thermique estimée par l'unité d'estimation de température d'équilibre thermique (202, 203) est égale ou supérieure à une deuxième valeur de seuil plus basse que la première valeur de seuil prédéterminée.

4. Dispositif de détection de surchauffe (10) selon la revendication 3, dans lequel
la portion de contrôle (21) est configurée pour réaliser une commande pour notifier un message incitant à réduire la température de moteur comme deuxième commande prédéterminée.

5. Dispositif de détection de surchauffe (10) selon l'une quelconque des revendications 1, et 3 à 4, dans lequel
l'unité de calcul de quantité de chaleur de conduction est configurée pour calculer la première quantité de chaleur reçue sur la base d'une différence de température entre une température de résistance thermique de bobine et la température de l'aimant (307) ou du stator (302) dans un cas où la température acquise de l'aimant (307) ou du stator (302) est égale ou inférieure à une température prédéterminée.

*FIG.1*

10

ECU 20

TEMPERATURE SENSOR 25

MOTOR DRIVER 26

ELECTRIC CURRENT SENSOR 27

CPU 21

MOTOR 30

OUTPUT DEVICE 28

ROM 22
CONTROL PROGRAM UNIT 221

RAM 23

MEMORY UNIT 24
TEMPERATURE STORAGE UNIT 241

# FIG.2

COIL
(U PHASE)

COIL
(W PHASE)

COIL
(V PHASE)

# FIG.3

```
              ┌─306          ┌─305          ┌─307
          ┌──────────┐   ┌──────────┐   ┌──────────┐
          │  SHAFT   │⟷│  ROTOR   │⟷│  MAGNET  │
          └──────────┘   └──────────┘   └──────────┘
                              ⇕
   ┌─304U          ┌─303U       ┌─302          ┌─301
┌──────────┐   ┌──────────┐ ┌──────────┐   ┌──────────┐
│  U COIL  │⟹│U INSULATOR│⟹│          │   │          │
└──────────┘   └──────────┘ │          │   │          │
                            │          │   │          │        OUTSIDE
   ┌─304V          ┌─303V   │          │   │          │     ⟹  AIR
┌──────────┐   ┌──────────┐ │  STATOR  │⟹│   CASE   │
│  V COIL  │⟹│V INSULATOR│⟹│          │   │          │
└──────────┘   └──────────┘ │          │   │          │
                            │          │   │          │
   ┌─304W          ┌─303W   │          │   │          │
┌──────────┐   ┌──────────┐ │          │   │          │
│  W COIL  │⟹│W INSULATOR│⟹│          │   │          │
└──────────┘   └──────────┘ └──────────┘   └──────────┘
```

# FIG.4

OUTSIDE AIR TEMPERATURE MEASURED BY TEMPERATURE SENSOR

TEMPERATURE INFORMATION FROM TEMPERATURE STORAGE UNIT

ELECTRIC CURRENT VALUE MEASURED BY ELECTRIC CURRENT SENSOR

20

201 TEMPERATURE ESTIMATION UNIT

202 COIL OVERHEATING WARNING THRESHOLD VALUE CALCULATION UNIT

203 COIL OVERHEATING ABNORMALITY THRESHOLD VALUE CALCULATION UNIT

204 DETERMINATION UNIT

205 NOTIFICATION UNIT

206 TORQUE CONTROL PORTION

TO MOTOR

# FIG.5

# FIG.6

```
                        START

                         │
                         ▼
              ┌───────────────────────┐ S11
              ╱   ELECTRIC              ╲        NO
             ╱ POWER STEERING DEVICE     ╲──────────────┐
             ╲      STARTED?             ╱               │
              ╲───────────────────────╱                 │
                         │ YES                           │
                         ▼          S12                  ▼
              ┌───────────────────────┐     ┌─────────────────────────┐ S21
              │ ESTIMATE COIL TEMPERATURE│   ╱   ELECTRIC              ╲    NO
              └───────────────────────┘    ╱ POWER STEERING DEVICE     ╲─────┐
                         │          S13    ╲      STOPPED?             ╱      │
                         ▼                  ╲───────────────────────╱        │
              ┌───────────────────────┐              │ YES                   │
              │ ESTIMATE STATOR TEMPERATURE│          ▼          S22          │
              └───────────────────────┘    ┌─────────────────────────┐       │
                         │          S14    │ STORE ESTIMATED TEMPERATURE│     │
                         ▼                 └─────────────────────────┘       │
              ┌───────────────────────┐              │                       │
              │ CALCULATE COIL OVERHEATING│          ▼                       │
              │ WARNING THRESHOLD VALUE │           END                      │
              └───────────────────────┘                                      │
                         │          S15                                      │
                         ▼                                                   │
              ┌───────────────────────┐                                     │
              │ CALCULATE COIL OVERHEATING│                                  │
              │ ABNORMALITY THRESHOLD VALUE│                                 │
              └───────────────────────┘                                     │
                         │                                                   │
                         ▼          S16                                      │
              ╱   COIL                 ╲       YES                           │
             ╱ TEMPERATURE≥COIL         ╲───────────────────────────┐        │
            ╱ OVERHEATING ABNORMALITY    ╲                          │        │
             ╲  THRESHOLD VALUE?         ╱                          │        │
              ╲───────────────────────╱                            │        │
                         │ NO                                       │        │
                         ▼          S17                             │        │
              ╱   STATOR                ╲      YES                   │        │
             ╱ TEMPERATURE≥              ╲──────────────────────────┤        │
            ╱ STATOR HEAT RESISTANCE      ╲                         │        │
             ╲  TEMPERATURE?             ╱                          ▼        │
              ╲───────────────────────╱            ┌─────────────────────────┐ S20
                         │ NO                       │ WARNING NOTIFICATION     │
                         ▼          S18             │ AND TORQUE LIMITATION    │
              ╱   COIL                 ╲      YES   └─────────────────────────┘
             ╱ TEMPERATURE≥             ╲──────┐              │
            ╱ COIL OVERHEATING WARNING   ╲     │              │
             ╲  TEMPERATURE?            ╱      ▼              │
              ╲───────────────────────╱  ┌──────────────────┐ S19
                         │ NO            │ WARNING NOTIFICATION│
                         │               └──────────────────┘
                         ▼                        │
                        END ◄─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010148322 A
- US 2017264233 A
- US 2017001661 A